# EUROPEAN PATENT APPLICATION

(11) **EP 3 866 417 A1**
(43) Date of publication of application: **18.08.2021**
(21) Application number: 20157452.2
(22) Date of filing: 14.02.2020
(51) Int. Cl.: H04L 12/863, H04L 12/861

(54) **METHOD FOR AN IMPROVED TRAFFIC SHAPING AND/OR MANAGEMENT OF IP TRAFFIC IN A PACKET PROCESSING SYSTEM, TELECOMMUNICATIONS NETWORK, NETWORK NODE OR NETWORK ELEMENT, PROGRAM AND COMPUTER PROGRAM PRODUCT**

(71) Applicant: Deutsche Telekom AG, 53113 Bonn (DE); Technische Universität Darmstadt, 64289 Darmstadt (DE)
(72) Inventor: NOBACH, Leonhard, 55120 Mainz (DE); KUNDEL, Ralf, 64289 Darmstadt (DE)
(74) Representative: Schwöbel, Thilo K.

(57) **Abstract**

The invention relates to a method for an improved traffic shaping and/or management of IP traffic in a packet processing system, especially as part of a telecommunications network, wherein the packet processing system comprises a traffic shaping processor and at least one separate packet buffering unit,
wherein data packets - received by the packet processing system and to be handled by the traffic shaping processor - are at least partly stored by the packet buffering unit, and wherein data packets - transmitted by the packet processing system - are at least partly egressed by the traffic shaping processor using the packet buffering unit,
wherein each one of the data packets is assigned to a specific queue out of a plurality of different queues, the specific queue being specified by means of a queue identification information,
wherein for an improved traffic shaping and/or management of IP traffic, the method comprises the following steps:
-- in a first step, a number of considered data packets, after or while being received by the packet processing system, are handled by the traffic shaping processor, wherein for at least a first part of the considered data packets a decision is taken to store this first part of the considered data packets in the packet buffering unit,
-- in a second step, each one of the first part of the considered data packets is stored in the packet buffering unit, wherein - for each such data packet of the first part of the considered data packets - a respective memory address information as well as a respective packet size information is received by the traffic shaping processor,
-- in a third step, subsequent to the second step, the traffic shaping processor processes all the considered data packets and applies traffic shaping to the considered data packets by means of using the respective queue identification information assigned to each one of the considered data packets, wherein - regarding each one of the data packets of the first part of the considered data packets - the traffic shaping processor uses the respective memory address information as well as the respective packet size information to address a respective data packet of the first part of the considered data packets prior to it being egressed by the traffic shaping processor.

## Description

### BACKGROUND

The present invention relates a method for an improved traffic shaping and/or management of IP traffic in a packet processing system, especially as part of a telecommunications network, wherein the packet processing system comprises a traffic shaping entity with a traffic shaping processor and at least one separate packet buffering unit.

Furthermore, the present invention relates to a telecommunications network for an improved traffic shaping and/or management of IP traffic in a packet processing system, especially as part of a telecommunications network, wherein the packet processing system comprises a traffic shaping entity with a traffic shaping processor and at least one separate packet buffering unit.

Additionally, the present invention relates to a network node or network element for an improved traffic shaping and/or management of IP traffic in a packet processing system, especially as part of a telecommunications network, wherein the packet processing system comprises a traffic shaping entity with a traffic shaping processor and at least one separate packet buffering unit.

Furthermore, the present invention relates to a program, and a computer program product for an improved traffic shaping and/or management of IP traffic in a packet processing system.

The exchange of packetized information in broadband communication systems or telecommunications networks, both in fixed-line as in wireless communication systems (or fixed-line communication networks and mobile communication networks) has already grown dramatically and probably will also grow in the future, especially due to the rapid spread of various data services as well as applications in such communication networks.

Currently, commercial off-the-shelf network packet processing chips or integrated circuits, which are typically used in high-performance network switches, are used to process and forward payload to serve subscribers connected to a telecommunications network.

Such network packet processing chips or integrated circuits, also called ASICs (application-specific integrated circuit), commonly support a fixed functionality and a limited scalability of packet queueing (e.g. regarding depth and/or number of queues) only, especially in view of a limited data storing (or data buffering) capacity. However, queueing requirements in a network might exceed, and typically does exceed the capabilities of such conventionally known network packet processing chips or integrated circuits.

Moreover, queueing is required in networking devices in order to buffer packets until they can be sent. Typically, this is very important before network links with limited bandwidth in order to guarantee a link utilization of almost 100%.

### SUMMARY

An object of the present invention is to provide a technically simple, effective and cost effective solution for an improved traffic shaping and/or management of IP traffic in a packet processing system, especially as part of a telecommunications network. A further object of the present invention is to provide a corresponding telecommunications network, a corresponding system, and a corresponding program and computer program product.

The object of the present invention is achieved by a method for an improved traffic shaping and/or management of IP traffic in a packet processing system, especially as part of a telecommunications network, wherein the packet processing system comprises a traffic shaping entity with a traffic shaping processor and at least one separate packet buffering unit,
wherein data packets - received by the packet processing system and to be handled by the traffic shaping entity - are at least partly stored by the packet buffering unit, and wherein data packets - transmitted by the packet processing system - are at least partly egressed by the traffic shaping entity using the packet buffering unit,
wherein each one of the data packets is assigned to a specific queue out of a plurality of different queues, the specific queue being specified by means of a queue identification information,
wherein for an improved traffic shaping and/or management of IP traffic, the method comprises the following steps:
-- in a first step, a number of considered data packets, after or while being received by the packet processing system, are handled by the traffic shaping entity, wherein for at least a first part of the considered data packets a decision is taken to store this first part of the considered data packets in the packet buffering unit,
-- in a second step, subsequent to the first step, each one of the first part of the considered data packets is stored in the packet buffering unit, wherein - for each such data packet of the first part of the considered data packets - a respective memory address information as well as a respective packet size information is received by the traffic shaping processor,
-- in a third step, subsequent to the second step, the traffic shaping entity processes all the considered data packets and applies traffic shaping to the considered data packets by means of using the respective queue identification information assigned to each one of the considered data packets, wherein - regarding each one of the data packets of the first part of the considered data packets - the traffic shaping processor uses the respective memory address information as well as the respective packet size information to address a respective data packet of the first part of the considered data packets prior to it being egressed by the traffic shaping entity.

It is thereby advantageously possible according to the present invention to overcome the aforementioned restriction (of unsatisfactory queueing capabilities, especially regarding or due to insufficient internal memory capacity of the traffic shaping processor) of the prior art by introducing - in a traffic shaping entity, and besides a traffic shaping processor - at least one separate packet buffering unit or memory (for example in the form of an external or separate DDRx memory (Double Data Rate Synchronous Dynamic RAM), especially a DDR4 or DDR5, DRAM memory and/or an external or separate high speed QDR memory (Quad Data Rate RAM), especially a QDRIIe memory, which stores or buffers data packets in order to reduce the internal memory requirements of the traffic shaping processor (or to enhance its performance), and after such data packets have been received (or ingressed) by the packet processing system. Typically, the data packets are stored (or buffered) in (or by) the (at least one) packet buffering unit after the data packets have been processed by the packet switching processor. Thus, the traffic shaping entity forms a system or entity of two components (traffic shaping processor and (at least one) packet buffering unit) where the traffic shaping processor does the queuing or queue handling, and the packet buffering unit is dedicated to externally or separately (from the traffic shaping processor) enhance the storing or buffering capacity of the traffic shaping entity regarding the data volume (i.e. the total size of a number of considered data packets combined) to be stored or buffered by the traffic shaping entity.

Internet service providers typically need to provide traffic shaping regarding network or data packets on their way to their customers. This means that data packets, e.g. at a broadband network gateway, are buffered for a short time (typically less than 100 ms) and then sent at a constant rate to the residential gateway (e.g. a DSL home router or a customer premises equipment) through the access network (e.g. OLT, MSAN). In this context, queueing is (generally) required to fully utilize a network connection. Depending on the scenario, however, the requirements vary greatly. For example, in data centers, all packets can usually be processed by the same queue and therefore usually only need to be buffered for a few microseconds, whereas in the access network of a telecommunications provider, one or more queues are required for each customer, and these queues are much larger (useful up to 100 ms). Especially for access network operators, this results in major challenges in the downstream direction (where packages are going to the customer); often, for each customer a certain number of queues, e.g. eight queues or more, are currently required to reflect different priorities (e.g. VoIP, IPTV, normal "best effort" traffic). At the same time, many customers are terminated on the same broadband network gateway (>10,000) which requires a very high number of queues. In case of an individual customer, a queue must be designed in such a way that the bandwidth of the connection can be used under normal conditions; hence, it needs to be possible to buffer about 50-100ms worth of data - i.e. data packets arriving during this time span. For a 100Mbit/s DSL line this would be 10 Mbit = 1,25 MB. Taking into account many customers, several gigabytes (GB) of memory are required, provided that dedicated memory is available for each customer/queue.

According to the present invention, data packets - received by the packet processing system and to be handled by the traffic shaping entity - are at least partly stored by the packet buffering unit (i.e. at least a part of such data packets received (and handled by the packet processing system) are stored or buffered by the packet buffering unit; such data packets buffered by the packet buffering unit being completely (or entirely) stored by the packet buffering unit - and, typically, other data packets (among the considered data packets) are not buffered by the packet buffering unit but internally stored within the traffic shaping processor of the traffic shaping entity).

According to the present invention, the data packets transmitted by the packet processing system are at least partly egressed by the traffic shaping entity, using the packet buffering unit, i.e. regarding such egressed data packets (egressed by the traffic shaping entity), the packet buffering unit is (or has been) involved in (previously) storing or buffering - externally or separately to the traffic shaping processor - at least a part of such data packets, even though the actual egressing operation regarding such data packets is actually performed by the traffic shaping processor alone, i.e. the packet buffering unit is typically not involved in the egressing operation.
The data packets are organized in queues (or belong to queues). This means that each one of the data packets is assigned to a specific queue out of a plurality of different queues. Typically, each queue (i.e. also the specific queue) is specified or can be identified means of a queue identification information.

According to the present invention, the inventive method comprises the following steps:
-- in a first step, a number of considered data packets (i.e. an integer number n of considered data packets), after or while being received by the packet processing system, are handled by the traffic shaping entity, wherein for at least a first part of the considered data packets (i.e. for an integer number of m data packets out of the considered n data packets, m being smaller than or equal to n) a decision is taken to store this first part (i.e. the m data packets) of the considered data packets in the packet buffering unit,
-- in a second step, subsequent to the first step, each one of the first part of the considered data packets (i.e. each one of the m data packets) is stored in the packet buffering unit, wherein - for each such data packet of the first part of the considered data packets - a respective memory address information as well as a respective packet size information is received by the traffic shaping processor,
-- in a third step, subsequent to the second step, the traffic shaping entity processes all the considered data packets and applies traffic shaping to the considered data packets by means of using the respective queue identification information assigned to each one of the considered data packets, wherein - regarding each one of the data packets of the first part of the considered data packets - the traffic shaping processor uses the respective memory address information as well as the respective packet size information to address a respective data packet (or to address the data content of the data packet) of the first part of the considered data packets prior to it being egressed by the traffic shaping entity.

Data packets according to the present invention are especially, but not necessarily, IP traffic packets, or Ethernet packets, or GEM (GPON encapsulation method) frames - all of which typically also comprise IP traffic packets. Conventionally known hardware switches commonly process packets using a special ASIC which is only designed for packet processing and forwarding.

The telecommunications network according to the present invention might be a fixed-line telecommunications network or a mobile communication network but preferably is a telecommunications network having both aspects (or parts) of a fixed-line telecommunications network (or being a fixed-line telecommunications network in such parts) and aspects (or parts) of a mobile communication network (or being a mobile communication network in such parts); such networks are also known under the term fixed-mobile-convergence networks (FMC networks).

According to the present invention, it is advantageously possible and preferred that the considered data packets are of a maximum packet size corresponding to a maximum transmission unit value being applied or used within at least part of the telecommunications network, wherein, among the considered data packets, the first part of data packets corresponds to data packets having a packet size of 100% or less than 100% of the maximum packet size and of 10% or more than 10% of the maximum packet size, preferably of 20% or more than 20% of the maximum packet size, preferably of 30% or more than 30% of the maximum packet size, preferably of 40% or more than 40% of the maximum packet size, preferably of 50% or more than 50% of the maximum packet size.

It is thereby advantageously possible to store especially the larger data packets externally or separately to the traffic shaping processor within the traffic shaping entity. Especially, when assuming, e.g., a maximum packet size corresponding to a maximum transmission unit value of between 1500 Bytes and 1600 Bytes, the first part of the data packets could, e.g., correspond to all data packets larger than, e.g., between about 200 Bytes and about 300 Bytes, especially 256 Bytes.

According to the present invention, it is advantageously furthermore possible and preferred that the considered data packets correspond to a first combined amount of data corresponding to the sum of the packet sizes of each of the considered data packets, wherein a second combined amount of data corresponding to the sum of the packet sizes of each data packet of the first part of data packets corresponds to less than 100% of the first combined amount of data and of 70% or more than 70% of the first combined amount of data, preferably of 80% or more than 80% of the first combined amount of data, preferably of 90% or more than 90% of the first combined amount of data, preferably of 95% or more than 95% of the first combined amount of data.

According to the present invention, it is thereby advantageously possible that the larger part, especially by far the larger part, of the total amount of traffic data to be stored (or buffered) by the traffic shaping entity is actually stored (or buffered) in (or by) the packet buffering unit, i.e. externally to (or separately from) the traffic shaping processor.

According to the present invention, it is advantageously possible and preferred that for at least a second part of the considered data packets (i.e. for an integer number of n - m data packets out of the considered n data packets, m being smaller than n; in case m would be equal to n, no data packets of the second part would exist as all considered data packets would have to be considered as data packets of the first part, i.e. being stored (or buffered) externally to or separately from the traffic shaping processor), a decision is taken to store this second part of the considered data packets in an internal memory of the traffic shaping processor instead of (storing or buffering it) separately in the packet buffering unit, wherein the traffic shaping processor processes all the considered data packets and applies traffic shaping to the considered data packets by means of using the respective queue identification information assigned to each one of the considered data packets, wherein - regarding each one of the data packets of the second part of the considered data packets - the traffic shaping processor handles all the data of a respective data packet of the second part of the considered data packets prior to it being egressed by the traffic shaping entity.

By means of storing this second part of the considered data packets in an internal memory of the traffic shaping processor (instead of separately in the packet buffering unit), it is advantageously possible according to the present invention to use the internal memory of the traffic shaping processor for the smaller data packets, having the advantage to be able to use higher speed memory as well as reducing to a waste of memory resources (of the external memory) as even for low-size data packets, a memory range needs to be held available corresponding to the maximum packet size.

Furthermore, it is advantageously possible and preferred according to the present invention that - upon reception and/or while handling, by the traffic shaping processor, of the first part of the considered data packets - each one specific data packet of these data packets of the first part of the considered data packets is stored in the packet buffering unit and egressed from the traffic shaping entity or dropped by executing the following sub-steps:
-- a memory allocation entity or functionality of the traffic shaping entity provides a storing indication information related to an available memory range within the packet buffering unit,
-- the data of the specific data packet is stored in the packet buffering unit at the location indicated by the storing indication information, thereby providing both the packet size information and the storing indication information as the memory address information to the traffic shaping processor,
-- at the time of scheduled egressing of the specific data packet - and in case the specific data packet shall not be dropped -, the traffic shaping processor uses both the memory address information and the packet size information to address the specific data packet within the packet buffering unit, in order to egress the specific data packet,
-- the respective memory range within the packet buffering unit is released or declared to be available again.

By means of using and exchanging both the packet size information and the storing indication information (as the memory address information) to the traffic shaping processor, it is advantageously possible according to the present invention that the sequence of data packets within the queues is completely handled and controlled by the traffic shaping processor while only the task of storing (or buffering) the corresponding data volume (i.e. the content of the data packets of the first part of considered data packets) is performed by the packet buffering unit of the traffic shaping entity.

Furthermore, and according to an alternative embodiment of the present invention, it is preferred that - within the internal memory of the traffic shaping processor and in order to provide for a proper scheduling of the data packets of different queues - the multitude of different queues are stored such that queue data related to successive data packets within each queue are stored sequentially, wherein - with regard to the specific data packet of at least the data packets of the first part of the considered data packets - such queue data comprise the memory address information and the packet size information of the specific data packet, wherein the distribution of a plurality of pieces of actual memory address information within the packet buffering unit is independent from the sequence of the respective specific data packets within a queue and/or to which queue the respective specific data packets belong to.

Thereby, it is advantageously possible to store the data packets of the first part of the considered data packets in the packet buffering unit in an arbitrary sequence, especially independently from the sequence of the data packets within a queue.

According to a further preferred embodiment of the present invention, the packet processing system comprises, besides the traffic shaping entity, a programmable packet switching processor, and wherein data packets - received by the packet processing system - are ingressed to the packet switching processor, and wherein data packets - transmitted by the packet processing system - are egressed by the traffic shaping entity.

According to a further embodiment of the present invention, the traffic shaping entity applies traffic shaping to the considered data packets by means of using the respective queue identification information of each one of the considered data packets to select a queue for each one of the considered data packets, respectively such that a multitude of data consumers can be provided with data packets in parallel,
wherein especially the data consumers are subscribers of an aggregation network, wherein the aggregation network comprises a network node or network element, especially a broadband network gateway element, wherein the packet processing system comprising the programmable packet switching processor and the traffic shaping entity, is preferably part of the network node or network element.

It is thereby advantageously possible to apply the inventive concept in an aggregation network and/or a network node or network element of an aggregation network, serving, especially, a large number of customers or subscribers.

Furthermore, it is advantageously possible and preferred according to the present invention that - in the third step - the traffic shaping processor applies traffic shaping to the considered data packets by means of using the respective queue identification information, and by means of:
-- using a number of queues exceeding 10.000 queues, wherein each one of said queues has a depth or a storing capacity of more than 0,1 MB,
-- applying a hierarchical scheduling of the considered data packets.

According to the present invention, it is advantageously possible and preferred that the data consumers are subscribers of an aggregation network, wherein the aggregation network comprises a network node or network element, especially a broadband network gateway element, wherein the packet processing system comprising the programmable packet switching processor and the traffic shaping processor is preferably part of the network node or network element.

It is thereby advantageously possible to apply the inventive concept in an aggregation network and/or a network node or network element of an aggregation network, serving, especially, a large number of customers or subscribers.

According to a further preferred embodiment of the present invention, the traffic shaping processor additionally provides a counting of the egress traffic of the queues, especially by means of counting the number of bytes and/or the number of packets, wherein said counting is performed independently for each of the queues of the traffic shaping processor.

By means of providing a counting of the egress traffic of the different queues, it is advantageously possible according to the present invention to easily provide for accounting capabilities within the packet processing system.

According to further embodiments of the present invention, the queue identification information, appended to each one of the considered data packets, is part of the considered data packets, respectively (especially between the packet switching processor and the traffic shaping entity), especially positioned in front of the Ethernet header or between the Ethernet and the IP header, and wherein the traffic shaping processor removes the queue identification information from the considered data packets prior to storing the considered IP traffic packet in the selected or specified queue, respectively.

By means appending the queue identification information to each one of the considered data packets and being part of the considered data packets, it is advantageously possible that the packet switching processor part of the packet processing system is able to communicate with the traffic shaping processor part of the packet processing system.

Furthermore, it is advantageously possible and preferred according to the present invention that the queue identification information corresponds to a simple consecutive number, or different parts of the queue identification information have different meanings, especially different shared links/resources in an access tree.

Thereby, it is advantageously possible to provide for an efficient communication between the packet switching processor part of the packet processing system and the traffic shaping entity part (or traffic shaping processor part) of the packet processing system.

It is especially preferred that the traffic shaping processor comprises resources to handle a very large number of queues, at least 10.000 queues, but typically providing the capabilities for more than 10.000 queues, preferably more than 50.000 queues, still preferably more than 100.000 different queues, still more preferably more than 200.000 queues, still more preferably more than 400.000 queues, and still more preferably more than 800.000 queues; in all these cases the number of available queues is as large as possible, especially one million queues, or 10 million queues, or 100 million queues. Additionally, not only the number of queues is comparatively large according to the present invention, but also their depth - i.e. the capabilities, especially for each one of the large number of queues, to store many data packets and/or many data packets which have a comparatively large size. According to the present invention, especially a storing capacity of each of the queues of the inventive packet processing system corresponds to 10 MB or more than 10 MB, preferably corresponds to 20 MB or more than 20 MB, still preferably corresponds to 50 MB or more than 50 MB, still preferably corresponds to 100 MB or more than 100 MB; in all these cases the storing capacity of each of the queues of the inventive packet processing system is as large as possible, especially 200 MB, or 1GB, or 10 GB. The total required memory of the whole shaping processor is a junction of the individual queues and thereby multiple GBs (maybe up to 100GB in future, currently up to 1 GB) can be reached.

Furthermore, the present invention relates to a telecommunications network for an improved traffic shaping and/or management of IP traffic in a packet processing system, especially as part of the telecommunications network, wherein the packet processing system comprises a traffic shaping entity with a traffic shaping processor and at least one separate packet buffering unit,
wherein data packets - received by the packet processing system and to be handled by the traffic shaping entity - are at least partly stored by the packet buffering unit, and wherein data packets - transmitted by the packet processing system - are at least partly egressed by the traffic shaping entity using the packet buffering unit,
wherein each one of the data packets is assigned to a specific queue out of a plurality of different queues, the specific queue being specified by means of a queue identification information,
wherein for an improved traffic shaping and/or management of IP traffic, the telecommunications network is configured such that:
-- a number of considered data packets, after or while being received by the packet processing system, are handled by the traffic shaping entity, wherein for at least a first part of the considered data packets a decision is taken to store this first part of the considered data packets in the packet buffering unit,
-- each one of the first part of the considered data packets is stored in the packet buffering unit, wherein - for each such data packet of the first part of the considered data packets - a respective memory address information as well as a respective packet size information is received by the traffic shaping processor,
-- the traffic shaping entity processes all the considered data packets and applies traffic shaping to the considered data packets by means of using the respective queue identification information assigned to each one of the considered data packets, wherein - regarding each one of the data packets of the first part of the considered data packets - the traffic shaping processor uses the respective memory address information as well as the respective packet size information to address a respective data packet of the first part of the considered data packets prior to it being egressed by the traffic shaping entity.

Furthermore, the present invention relates to a network node or network element, especially broadband network gateway element, for an improved traffic shaping and/or management of IP traffic in a packet processing system, especially as part of a telecommunications network, the network node or the network element comprising the packet processing system,
wherein the packet processing system comprises a traffic shaping entity with a traffic shaping processor and at least one separate packet buffering unit,
wherein data packets - received by the packet processing system and to be handled by the traffic shaping entity - are at least partly stored by the packet buffering unit, and wherein data packets - transmitted by the packet processing system - are at least partly egressed by the traffic shaping entity using the packet buffering unit,
wherein each one of the data packets is assigned to a specific queue out of a plurality of different queues, the specific queue being specified by means of a queue identification information,
wherein for an improved traffic shaping and/or management of IP traffic, the network node or network element is configured such that:
-- a number of considered data packets, after or while being received by the packet processing system, are handled by the traffic shaping entity, wherein for at least a first part of the considered data packets a decision is taken to store this first part of the considered data packets in the packet buffering unit,
-- each one of the first part of the considered data packets is stored in the packet buffering unit, wherein - for each such data packet of the first part of the considered data packets - a respective memory address information as well as a respective packet size information is received by the traffic shaping processor,
-- the traffic shaping entity processes all the considered data packets and applies traffic shaping to the considered data packets by means of using the respective queue identification information assigned to each one of the considered data packets, wherein - regarding each one of the data packets of the first part of the considered data packets - the traffic shaping processor uses the respective memory address information as well as the respective packet size information to address a respective data packet of the first part of the considered data packets prior to it being egressed by the traffic shaping entity.

Additionally, the present invention relates to a system for an improved traffic shaping and/or management of IP traffic in a packet processing system, especially as part of a telecommunications network, wherein the packet processing system comprises a traffic shaping entity with a traffic shaping processor and at least one separate packet buffering unit,
wherein data packets - received by the packet processing system and to be handled by the traffic shaping entity - are at least partly stored by the packet buffering unit, and wherein data packets - transmitted by the packet processing system - are at least partly egressed by the traffic shaping entity using the packet buffering unit,
wherein each one of the data packets is assigned to a specific queue out of a plurality of different queues, the specific queue being specified by means of a queue identification information,
wherein for an improved traffic shaping and/or management of IP traffic, the system is configured such that:
-- a number of considered data packets, after or while being received by the packet processing system, are handled by the traffic shaping entity, wherein for at least a first part of the considered data packets a decision is taken to store this first part of the considered data packets in the packet buffering unit,
-- each one of the first part of the considered data packets is stored in the packet buffering unit, wherein - for each such data packet of the first part of the considered data packets - a respective memory address information as well as a respective packet size information is received by the traffic shaping processor,
-- the traffic shaping entity processes all the considered data packets and applies traffic shaping to the considered data packets by means of using the respective queue identification information assigned to each one of the considered data packets, wherein - regarding each one of the data packets of the first part of the considered data packets - the traffic shaping processor uses the respective memory address information as well as the respective packet size information to address a respective data packet of the first part of the considered data packets prior to it being egressed by the traffic shaping entity.

Still additionally, the present invention relates to a program comprising a computer readable program code which, when executed on a computer and/or on a network node of a telecommunications network and/or on a packet processing system and/or on an ASIC, or in part on a network node of a telecommunications network and in part on a packet processing system and/or in part on an ASIC, causes the computer and/or the network node of a telecommunications network and/or the packet processing system or the ASIC to perform the inventive method.

Furthermore, the present invention relates to a computer program product for an improved traffic shaping and/or management of IP traffic in a packet processing system, the computer program product comprising a computer program stored on a storage medium, the computer program comprising program code which, when executed on a computer and/or on a network node of a telecommunications network and/or on a packet processing system and/or on an ASIC, or in part on a network node of a telecommunications network and in part on a packet processing system and/or in part on an ASIC, causes the computer and/or the network node of a telecommunications network and/or the packet processing system or the ASIC to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a packet processing system according to the present invention, comprising (besides a packet switching processor or packet switching processor part), as part of a traffic shaping entity, a traffic shaping processor and a packet buffering unit.
Figure 2 schematically illustrates a representation of further details of a traffic shaping processor according to the present invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

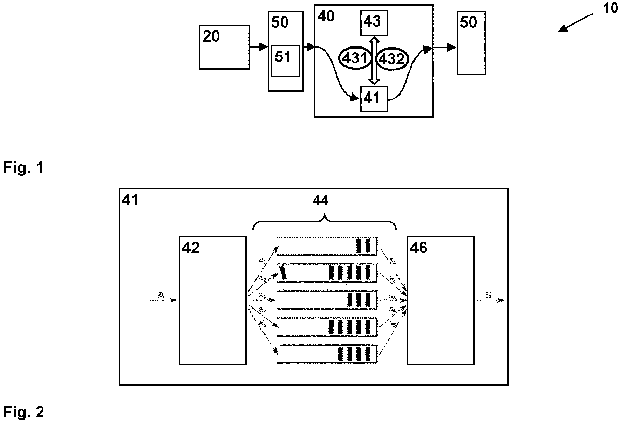

In Figure 1, a packet processing system 10 according to the present invention is schematically illustrated. The packet processing system 10 comprises a traffic shaping entity 40 comprising a traffic shaping processor 41, and a packet buffering unit 43. Furthermore, the packet processing system 10 is represented, in Figure 1, with a packet switching processor 20 providing data packets 50 to the traffic shaping entity 40. The packet switching processor 20 is especially provided as a P4 processor or P4 capable processor. The traffic shaping entity 40 especially comprises a multiplexer, a multitude of different queues (typically more than 100.000), and different pieces of runtime configuration information (such as, e.g., a transmission rate to be applied, a burst size per queue, etc.), as well as an arbiter or algorithm.

The architecture of the traffic shaping entity 40 (with its at least two parts of the traffic shaping processor 41 and the packet buffering unit 43) provides for a disaggregation of packet handling and corresponding queue handling (performed by the traffic shaping processor 41) on the one hand, and mainly storing-related task (performed by the packet buffering unit 43) on the other hand, especially by means of two different chips or integrated circuits.

The placement or assembly of these two (or more) chips (or integrated circuits, i.e. the two different parts or portions) can be either in the same ASIC package, in the same device (e.g. one switch case) or in different devices. All these designs have different advantages and disadvantages:
According to a first alternative embodiment, the two different parts or portions are located or arranged in the same package: This means, both chips are manufactured within the same package. The advantage of such an embodiment is that no additional package pins are needed; the disadvantage is that such an arrangement is typically expensive for small production numbers.
According to a second alternative embodiment, the two different parts or portions are located or arranged in or as part of the same device or same board: This means that both chips are integrated circuits (that are separated but) placed on the same printed circuit board (PCB), also known as "mainboard". This means that the chips, including the package, are off-the-shelf hardware; the pins of the chip are electrically directly attached; no expensive wires (like in the third alternative embodiment) are needed to connect the chips. However, a special device needs to be built.
According to a third alternative embodiment, the two different parts or portions are hosted by two different devices, i.e. they are placed closely together and are connected by cables (e.g. Ethernet based copper or (optical) fiber)

Data packets 50 (comprising, as usual, a MAC information or MAC address (media access control address), an (or a plurality of) IP address indication(s) or information, a payload portion, etc.) are schematically represented, in Figure 1, at different points in the IP traffic packet processing chain through the packet processing system 10: a first IP traffic packet 50 is schematically shown between the packet switching processor 20 (or packet switching processor part 20 of the packet processing system 10), and the traffic shaping entity 40 (or traffic shaping entity part 40 of the packet processing system), wherein this first IP traffic packet 50 is schematically shown as having a queue identification information 51. A second IP traffic packet 50 is schematically shown after the traffic shaping entity 40 (or traffic shaping entity part 40); the second IP traffic packet 50 has the queue identification information 51 removed as the queue identification information 51 primarily serves the purpose that the packet switching processor 20 is able to inform the traffic shaping entity 40 about the respective IP traffic packet 50, especially regarding its treatment and its processing and handling, especially with regard to its queue, etc. As part of the traffic shaping entity 40, the traffic shaping processor 41 and the packet buffering unit 43 are schematically shown in Figure 1. The traffic shaping processor 41 and the packet buffering unit 43 are exchanging data, especially related to the information content of data packets to be stored or buffered in the packet buffer unit 43. It is to be understood that a plurality of packet buffering units 43 might be present as part of the traffic shaping entity 40.

According to the present invention, an improved traffic shaping and/or management of IP traffic is possible by means of the following steps: For a stream of data packets (or for a number of considered data packets), at least a first part of these data packets is decided (typically based on their packet size) to be stored in the packet buffering unit 43. Subsequently, regarding this first part of data packets, their respective information content is stored in the packet buffering unit 43, wherein - for each such data packet of the first part of the considered data packets 50 - a respective memory address information 431 as well as a respective packet size information 432 is received by the traffic shaping processor 41. Furthermore subsequently, the traffic shaping entity 40 processes all the considered data packets 50 and applies traffic shaping to the considered data packets 50 by means of using the respective queue identification information 51 assigned to each one of the considered data packets 50, wherein - regarding each one of the data packets of the first part of the considered data packets 50 - the traffic shaping processor 41 uses the respective memory address information 431 as well as the respective packet size information 432 to address a respective data packet of the first part of the considered data packets 50 prior to it being egressed by the traffic shaping entity 40.

Figure 2 schematically illustrates a representation of further details of a traffic shaping processor 41 according to the present invention. The traffic shaping processor 41 comprises a first part 42 (or first module or first component), corresponding to or implementing a classifier or queue management algorithm. Inputs (or ingresses) (schematically denoted by reference sign A in Figure 2) to the traffic shaping processor 41 are provided to the first part 42. The traffic shaping processor 41 furthermore also comprises a second part 46 (or second module or second component), corresponding to or implementing a scheduling algorithm. Output (or egresses) (schematically denoted by reference sign S in Figure 2) from the traffic shaping processor 41 are provided by the second part 46. The traffic shaping processor 41 furthermore also comprises a queue part 44 or queue element. Each queue (five of which are schematically represented in Figure 2, but shown without an individual, respective reference sign) of the queue part 44 comprises an input side (schematically represented on the left hand side in Figure 2) and an output side (schematically represented on the right hand side in Figure 2). The processing of (payload) data, especially data packets and within the traffic shaping processor 41 can schematically be understood as follows: The first part 42 receives the incoming (or ingressing) data packets (collectively denoted by reference sign A), and distributes the incoming packets to the different queues of the queue part 44 as individual inputs a₁, a₂, a₃, a₄, a₅ of the different queues of the queue part 44. The second part 46 takes individual data packets from the different queues of the queue part 44 as individual inputs s₁, s₂, s₃, s₄, s₅ of the different queues of the queue part 44, and provides the resulting traffic (or egressing) as data packets (collectively denoted by reference sign S) to the egress of the traffic shaping processor 41 (and, as a consequence, to the egress of the packet processing system 10.

According to the present invention, the traffic shaping processor 41 interacts with the packet buffering unit 43 in order to store (or buffer) data packets 50 within the packet buffering unit 43, and to retrieve the data packets 50 once they need to be egressed from the traffic shaping processor 41 (or from the traffic shaping entity 40). Hence, it is proposed to separate the functionalities of the traffic shaping processor 41 on the one hand from the storing capacity of the packet buffering unit 43 on the other hand, especially in two separate chips or integrated circuits. Additionally - by means of using, for each data packet of the first part of the considered data packets a respective memory address information 431 as well as a respective packet size information 432 - it is advantageously possible, according to the present invention, to coordinate the traffic shaping processor 41 and the packet buffering unit 43.

Typically, data packets are received by the traffic shaping entity 40, and is written to the external memory of the packet buffering unit 43 due to a command of a Rx-handler. Prior to the data packet even being received by the traffic shaping entity 40, a memory allocation unit transmits an available memory address to the Rx-handler, i.e. a range of memory sufficient to store a data packet of arbitrary size (i.e. up to the maximum transmission unit of, typically, between 1500 and 1600 Bytes, e.g. 1514 Bytes. The Rx-handler writes the incoming data packet to the memory address indicated, and transmits this address or memory location as well as the size of the data packet to an enqueue manager of the traffic shaping entity 40.

The data packets stored in the packet buffering unit 43 are not sorted according to their queue sequence; this information is only needed afterwards in the enqueue manager. The queues are represented in the internal memory, typically of the SRAM type, of the traffic shaping processor 41; thereby, high-frequency requests of the scheduling algorithm can be enabled. Each queue element (i.e. which corresponds to a data packet of the queue) only needs to comprise a pointer (or a reference, i.e. the memory address information 431) to the memory location (within the external packet buffering unit 43) as well as the packet size of the data packet (i.e. the packet size information 432).

The Dequeue-manager takes or removes the first element of a considered queue (by means of the scheduler or a scheduler entity or functionality), and by means of the reference information (i.e. comprising at least the memory address information 431 and the respective packet size information 432) stored (according to the sequence of the data packets within the considered queue) within the internal memory of the traffic shaping processor 41, the actual packet data (i.e. the data actually representing the considered data packet (of a data packet of the first part of data packets), stored in the external memory of the packet buffering unit 43) are requested at (or from) the external memory (especially the external DRAM memory), and the corresponding data packet is sent (or ergressed) by the traffic shaping processor 41 (and the respective memory range within the packet buffering unit 43 is again de-allocated). Hence (and regarding the data packets of the first part of the considered data packets), the actual data (or the content of the data packets), i.e. the data that are not required for the scheduling operations of the traffic shaping processor 41, are located in the memory of the packet buffering unit 43, external to the traffic shaping processor 41.

Typically, there is a relatively stable, common and reproducible distribution regarding the size (or length) of data packets when a sufficiently large number of data packets is considered in a typical traffic stream. According to this distribution, there are predominantly
-- either comparatively large data packets (e.g. more than 60% to 70% (and up to more than 90%) relative occurrence (depending on and varying according to the actually used transmission protocol, e.g. TCP (transmission control protocol), quick (quick udp internet connections), or udp (user datagram protocol)) in the range of between 1441 Bytes and 1520 Bytes),
-- or comparatively small data packets (e.g. up to 20% relative occurrence (again depending on and varying according to the actually used transmission protocol, e.g. TCP, quick, or udp) in the range of between 1 and 240 Bytes), and the combined relative occurrence for medium sized data packets (e.g. between 240 Bytes and 1440 Bytes) is typically less than 10%, often only a couple of percentage points. This situation is met according to the present invention by means of storing (or buffering) the comparatively large data packets (as well as the few medium sized data packets) in the external (especially DRAM) memory of the packet buffering unit 43, whereas the comparatively small data packets are stored (of buffered) internally (especially in SRAM memory) to the traffic shaping processor 41. For the smaller data packets, the external (typically DRAM) memory of the packet buffering unit 43 is comparatively unsuited as the burst size would be comparatively small; regarding the internal (typically SRAM) memory, this problem is almost non-existent.

According to the present invention, it is advantageously possible to use a plurality of packet buffering units 43 and to use this plurality of packet buffering units 43 in parallel as one virtual (combined) memory: Preferably, the external memory (i.e. the plurality of buffering units) is abstracted by using the Advanced eXtensible Interface (AXI), a parallel high-performance, synchronous, high-frequency, multi-master, multi-slave communication interface. As the bandwidth for currently available external (especially DRAM) memory is of the order of magnitude of around 100 Gbit per second, it is advantageously possible according to the present invention that by means of using a plurality of packet buffering units 43 in parallel the usable (or available) memory bandwidth of the packet buffering units 43 is able to be enhanced (compared to the mentioned bandwidth of around 100 Gbit per second for a single memory unit). E.g., in case of using three packet buffering units 43, regarding incoming data packets, the three buffering units are used it turn: the first data packet is written to the first buffering unit, the second data packet is written to the second buffering unit, the third data packet is written to the third buffering unit, and for the fourth data packet, the first buffering unit is again used, and so forth.

In case a data packet shall be dropped by the scheduler (to drop data packets is a typical behavior in case of comparatively complete (or full) queues in order to provide the information to TCP connections to reduce the transmission rate), the respective memory range within the external memory of the packet buffering unit 43 only needs to be de-allocated (or freed) by means of a memory allocation functionality or unit.

## Claims

1. Method for an improved traffic shaping and/or management of IP traffic in a packet processing system (10), especially as part of a telecommunications network (100), wherein the packet processing system (10) comprises a traffic shaping entity (40) with a traffic shaping processor (41) and at least one separate packet buffering unit (43),
wherein data packets - received by the packet processing system (10) and to be handled by the traffic shaping entity (40) - are at least partly stored by the packet buffering unit (43), and wherein data packets - transmitted by the packet processing system (10) - are at least partly egressed by the traffic shaping entity (40) using the packet buffering unit (43),
wherein each one of the data packets is assigned to a specific queue out of a plurality of different queues, the specific queue being specified by means of a queue identification information (51),
wherein for an improved traffic shaping and/or management of IP traffic, the method comprises the following steps:
-- in a first step, a number of considered data packets (50), after or while being received by the packet processing system (10), are handled by the traffic shaping entity (40), wherein for at least a first part of the considered data packets (50) a decision is taken to store this first part of the considered data packets (50) in the packet buffering unit (43),
-- in a second step, subsequent to the first step, each one of the first part of the considered data packets (50) is stored in the packet buffering unit (43), wherein - for each such data packet of the first part of the considered data packets (50) - a respective memory address information (431) as well as a respective packet size information (432) is received by the traffic shaping processor (41),
-- in a third step, subsequent to the second step, the traffic shaping entity (40) processes all the considered data packets (50) and applies traffic shaping to the considered data packets (50) by means of using the respective queue identification information (51) assigned to each one of the considered data packets (50), wherein - regarding each one of the data packets of the first part of the considered data packets (50) - the traffic shaping processor (41) uses the respective memory address information as well as the respective packet size information to address a respective data packet of the first part of the considered data packets (50) prior to it being egressed by the traffic shaping entity (40).

2. Method according to claim 1, wherein the considered data packets (50) are of a maximum packet size (50') corresponding to a maximum transmission unit value being applied or used within at least part of the telecommunications network (100), wherein, among the considered data packets (50), the first part of data packets corresponds to data packets having a packet size of 100% or less than 100% of the maximum packet size (50') and of 10% or more than 10% of the maximum packet size (50'), preferably of 20% or more than 20% of the maximum packet size (50'), preferably of 30% or more than 30% of the maximum packet size (50'), preferably of 40% or more than 40% of the maximum packet size (50'), preferably of 50% or more than 50% of the maximum packet size (50').

3. Method according to one of the preceding claims, wherein the considered data packets (50) correspond to a first combined amount of data corresponding to the sum of the packet sizes of each of the considered data packets (50), wherein a second combined amount of data corresponding to the sum of the packet sizes of each data packet of the first part of data packets corresponds to less than 100% of the first combined amount of data and of 70% or more than 70% of the first combined amount of data, preferably of 80% or more than 80% of the first combined amount of data, preferably of 90% or more than 90% of the first combined amount of data, preferably of 95% or more than 95% of the first combined amount of data.

4. Method according to one of the preceding claims, wherein for at least a second part (56) of the considered data packets (50) a decision is taken to store this second part (56) of the considered data packets (50) in an internal memory of the traffic shaping processor (41) instead of separately in the packet buffering unit (43), wherein the traffic shaping processor (41) processes all the considered data packets (50) and applies traffic shaping to the considered data packets (50) by means of using the respective queue identification information (51) assigned to each one of the considered data packets (50), wherein - regarding each one of the data packets of the second part (56) of the considered data packets (50) - the traffic shaping processor (41) handles all the data of a respective data packet of the second part (56) of the considered data packets (50) prior to it being egressed by the traffic shaping entity (40).

5. Method according to one of the preceding claims, wherein - upon reception and/or while handling, by the traffic shaping processor (41), of the first part of the considered data packets (50) - each one specific data packet of these data packets of the first part of the considered data packets (50) is stored in the packet buffering unit (43) and egressed from the traffic shaping entity (40) or dropped by executing the following sub-steps:
-- a memory allocation entity or functionality of the traffic shaping entity (40) provides a storing indication information related to an available memory range within the packet buffering unit (43),
-- the data of the specific data packet is stored in the packet buffering unit (43) at the location indicated by the storing indication information, thereby providing both the packet size information (432) and the storing indication information as the memory address information (431) to the traffic shaping processor (41),
-- at the time of scheduled egressing of the specific data packet - and in case the specific data packet shall not be dropped -, the traffic shaping processor (41) uses both the memory address information (431) and the packet size information (432) to address the specific data packet within the packet buffering unit (43), in order to egress the specific data packet,
-- the respective memory range within the packet buffering unit (43) is released or declared to be available again.

6. Method according to one of the preceding claims, wherein - within the internal memory of the traffic shaping processor (41) and in order to provide for a proper scheduling of the data packets of different queues - the multitude of different queues are stored such that queue data related to successive data packets within each queue are stored sequentially, wherein - with regard to considered data packets (50) - such queue data comprise the memory address information (431) and the packet size information (432) of the specific data packet, wherein the distribution of a plurality of pieces of actual memory address information within the packet buffering unit (43) is independent from the sequence of the respective specific data packets within a queue and/or to which queue the respective specific data packets belong to.

7. Method according to one of the preceding claims, wherein the packet processing system (10) comprises, besides the traffic shaping entity (40), a programmable packet switching processor (20), and wherein data packets - received by the packet processing system (10) - are ingressed to the packet switching processor (20), and wherein data packets - transmitted by the packet processing system (10) - are egressed by the traffic shaping entity (40).

8. Method according to one of the preceding claims, wherein the traffic shaping entity (40) applies traffic shaping to the considered data packets (50) by means of using the respective queue identification information (51) of each one of the considered data packets (50) to select a queue for each one of the considered data packets (50), respectively such that a multitude of data consumers can be provided with data packets (50) in parallel,
wherein especially the data consumers are subscribers of an aggregation network, wherein the aggregation network comprises a network node or network element, especially a broadband network gateway element, wherein the packet processing system (10) comprising the programmable packet switching processor (20) and the traffic shaping entity (40), is preferably part of the network node or network element.

9. Method according to one of the preceding claims, wherein - in the third step - the traffic shaping processor (41) applies traffic shaping to the considered data packets (50) by means of using the respective queue identification information (51), and by means of:
-- using a number of queues exceeding 10.000 queues, wherein each one of said queues has a depth or a storing capacity of more than 0,1 MB,
-- applying a hierarchical scheduling of the considered data packets (50).

10. Telecommunications network (100) for an improved traffic shaping and/or management of IP traffic in a packet processing system (10), especially as part of the telecommunications network (100), wherein the packet processing system (10) comprises a traffic shaping entity (40) with a traffic shaping processor (41) and at least one separate packet buffering unit (43),
wherein data packets - received by the packet processing system (10) and to be handled by the traffic shaping entity (40) - are at least partly stored by the packet buffering unit (43), and wherein data packets - transmitted by the packet processing system (10) - are at least partly egressed by the traffic shaping entity (40) using the packet buffering unit (43),
wherein each one of the data packets is assigned to a specific queue out of a plurality of different queues, the specific queue being specified by means of a queue identification information (51),
wherein for an improved traffic shaping and/or management of IP traffic, the telecommunications network (100) is configured such that:
-- a number of considered data packets (50), after or while being received by the packet processing system (10), are handled by the traffic shaping entity (40), wherein for at least a first part of the considered data packets (50) a decision is taken to store this first part of the considered data packets (50) in the packet buffering unit (43),
-- each one of the first part of the considered data packets (50) is stored in the packet buffering unit (43), wherein - for each such data packet of the first part of the considered data packets (50) - a respective memory address information (431) as well as a respective packet size information (432) is received by the traffic shaping processor (41),
-- the traffic shaping entity (40) processes all the considered data packets (50) and applies traffic shaping to the considered data packets (50) by means of using the respective queue identification information (51) assigned to each one of the considered data packets (50), wherein - regarding each one of the data packets of the first part of the considered data packets (50) - the traffic shaping processor (41) uses the respective memory address information as well as the respective packet size information to address a respective data packet of the first part of the considered data packets (50) prior to it being egressed by the traffic shaping entity (40).

11. Network node or network element, especially broadband network gateway element, for an improved traffic shaping and/or management of IP traffic in a packet processing system (10), especially as part of a telecommunications network (100), the network node or the network element comprising the packet processing system (10),
wherein the packet processing system (10) comprises a traffic shaping entity (40) with a traffic shaping processor (41) and at least one separate packet buffering unit (43),
wherein data packets - received by the packet processing system (10) and to be handled by the traffic shaping entity (40) - are at least partly stored by the packet buffering unit (43), and wherein data packets - transmitted by the packet processing system (10) - are at least partly egressed by the traffic shaping entity (40) using the packet buffering unit (43),
wherein each one of the data packets is assigned to a specific queue out of a plurality of different queues, the specific queue being specified by means of a queue identification information (51),
wherein for an improved traffic shaping and/or management of IP traffic, the network node or network element is configured such that:
-- a number of considered data packets (50), after or while being received by the packet processing system (10), are handled by the traffic shaping entity (40), wherein for at least a first part of the considered data packets (50) a decision is taken to store this first part of the considered data packets (50) in the packet buffering unit (43),
-- each one of the first part of the considered data packets (50) is stored in the packet buffering unit (43), wherein - for each such data packet of the first part of the considered data packets (50) - a respective memory address information (431) as well as a respective packet size information (432) is received by the traffic shaping processor (41),
-- the traffic shaping entity (40) processes all the considered data packets (50) and applies traffic shaping to the considered data packets (50) by means of using the respective queue identification information (51) assigned to each one of the considered data packets (50), wherein - regarding each one of the data packets of the first part of the considered data packets (50) - the traffic shaping processor (41) uses the respective memory address information as well as the respective packet size information to address a respective data packet of the first part of the considered data packets (50) prior to it being egressed by the traffic shaping entity (40).

12. Program comprising a computer readable program code or hardware logic description, which, when executed on a computer and/or on a network node of a telecommunications network (100) and/or on a packet processing system (10) and/or on an ASIC, or in part on a network node of a telecommunications network (100) and in part on a packet processing system (10) and/or in part on an ASIC, causes the computer and/or the network node of a telecommunications network (100) and/or the packet processing system (10) or the ASIC to perform a method according one of claims 1 to 9.

13. Computer program or hardware logic description product for an improved traffic shaping and/or management of IP traffic in a packet processing system (10), the computer program product comprising a computer program stored on a storage medium, the computer program comprising program code which, when executed on a computer and/or on a network node of a telecommunications network (100) and/or on a packet processing system (10) and/or on an ASIC, or in part on a network node of a telecommunications network (100) and in part on a packet processing system (10) and/or in part on an ASIC, causes the computer and/or the network node of a telecommunications network (100) and/or the packet processing system (10) or the ASIC to perform a method according one of claims 1 to 9.
